# EUROPEAN PATENT SPECIFICATION

(11) **EP 2 313 725 B1**
(45) Date of publication and mention of the grant of the patent: **10.08.2016**
(21) Application number: 09759245.5
(22) Date of filing: 02.06.2009
(51) Int. Cl.: F26B 23/00

(54) **BIOSOLID DRYING AND UTILIZATION IN CEMENT PROCESSES**
TROCKNUNG VON BIOFESTSTOFFEN UND IHRE VERWENDUNG IN ZEMENTPROZESSEN
SÉCHAGE DE BIOSOLIDES ET UTILISATION DANS DES PROCÉDÉS DE FABRICATION DU CIMENT

(30) Priority: 03.06.2008 US 132070
(43) Date of publication of application: 27.04.2011
(73) Proprietor: Synagro Technologies, Inc., Houston, TX 77057 (US)
(72) Inventor: MAESTRI, Thomas, J., Frederick MD 21701 (US)
(74) Representative: Conroy, John
(86) International application number: PCT/US2009/045975
(87) International publication number: WO 2009/149085

(56) References cited:
- EP-A1- 1 466 131
- WO-A1-2004/029530
- WO-A1-2007/078199
- US-A1- 2005 274 066

## Description

### TECHNICAL FIELD

This document relates to utilizing biosolids in association with a cement-making process.

### BACKGROUND

A drying system can dry wet biosolids, such as municipal wastewater treatment plant residuals, to produce dried biosolids for use as agricultural fertilizer. Drying systems can use direct dryers, which dry wet biosolids by bringing heated air into direct contact with the wet biosolids in order to remove moisture, or indirect dryers, which dry wet biosolids through contact with a heated surface in order to remove moisture. Heated air used by a direct dryer may require an oxygen content level below a certain point to prevent unintended combustion or smoldering of the biosolids as it dries.

US 2005/0274066 A1 discloses a method and an apparatus for drying wet bio-solids by utilizing waste heat from a clinker cooler in a cement making process. The apparatus uses heat that is extracted by a heat exchange fluid from the clinker cooler and introduced into a contact dryer. The heat is used to heat a contact drying surface. The heat exchange fluid is in a closed loop between a heat exchanger in the clinker cooler and internally of the heated surfaces. The contact drying surfaces are in form of an auger which is heated by a conduit where heat exchange fluid is introduced into the inner portion of the auger. The outer case of the dryer can also be heated, as the case might be provided with a double wall structure to introduce heat exchange fluid between the walls of the double wall portion of the case of the dryer. A collection system to remove moisture and volatile organic compound from the dryer is also described.

### SUMMARY

The invention relates to a system for drying biosolids using waste heat from a cement-making process as defined in claim 1 and to a method of generating fuel for a cement-making process as defined in claim 9. The description presented herein may also apply to other systems (e.g., electric power plant applications) that burn solid fuels such as coal and from which waste heat can be extracted and utilized to dry biosolids which can then be used as fuel.

In a first general example, a system for generating biosolids using waste heat from a cement-making process is described. The system includes an exhaust interface from a cement-making component. The interface to channel a first heated gas having a first oxygen content level and generated during a manufacture of cement. The system also includes a direct dryer that receives wet biomaterials and uses a second heated gas in direct contact with the biomaterials to produce dried biosolids. The second heated gas has a second oxygen content level that is less than the first oxygen content level.

The system also includes a heat exchanger that receives the first heated gas from the exhaust interface and uses the first heated gas to heat the second heated gas and provides the second heated gas to the direct dryer. The first and second heated gases do not mix.

In some embodiments, the direct dryer further receives additive biosolids to combine with the wet biomaterials. The system can also include a recyclable biosolid bin that stores a portion of dried biosolids produced by the direct dryer. The portion can include non-conforming dried biosolids that do not conform to a predetermined size threshold. Additionally, the additive biosolids can include the portion of dried biosolids stored in the recyclable biosolid bin.

In other embodiments, the system can also include a gas content control system to control at least the second oxygen content level of the second gas. Also, the cement-making component can be selected from a group consisting of a cement kiln, a clinker cooler, and a precalciner. The system can also include an alternative exhaust interface to channel a third heated gas to the heat exchanger and can include an exhaust interface control to control amounts of the first or third heated gas provided to the heat exchanger. The exhaust interface control may be configured to transmit a signal to inject a first amount of the third heated gas if a second amount of the first heated gas falls below a threshold. In some implementations, the alternative exhaust interface is coupled to heat source selected from a group consisting of a coal furnace, a natural gas furnace, an oil furnace, etc..

In yet other embodiments, the first and second gases can include air. Additionally, the system can include a cement component intake interface to convey at least a portion of the dried biosolids from the direct dryer to one or more cement-making components for use as fuel during the manufacture of cement.

In a second general example, a method of drying biomaterial using heat from a cement-making process is described. The method includes receiving a first gas from a cement making-component. The first gas has a first oxygen content and is heated during a cement-making process. The method also includes heating a second gas using the heated first gas without mixing the first and second gases. The second gas has a second oxygen content that is lower than the first oxygen content of the first gas. Additionally, the method includes drying wet biomaterials through direct contact of the heated second gas with the wet biomaterials to produce dried biosolids.

In some embodiments, the method also includes combining the wet biomaterials with additive biosolids before or during the drying so that the wet biomaterials coat at least a portion of the additive biosolids during drying. At least a portion of the additive biosolids can include the dried biosolids produced from the drying. The method may also include selecting non-conforming dried biosolids for inclusion as additive biosolids, where the non-conforming dried biosolids do not conform to a predetermined size threshold.

In other embodiments, the method includes controlling the second oxygen content of the second gas so that it remains below a threshold at which the oxygen would combust within the direct dryer. Additionally, the method can include receiving a third gas from an alternate heat source and can include controlling an amount of the third gas used to heat the second gas based on an amount of the first gas received. Also, the method can include conveying at least a portion of the produced dried biosolids to one or more cement-making components for use as fuel during the cement-making process.

In a third general example, a method of generating fuel for a cement-making process is described, where the method includes channeling a first gas heated during a cement-making process to a heat exchanger and heating a second gas using the heat exchanger to transfer heat from the heated first gas to the second gas. The first gas has a first oxygen level content and the second gas has a second oxygen level content that is less than the first oxygen level. The method also includes drying wet biomaterial through contact of the heated second gas with the heated second gas to produce dried biosolids and conveying at least a portion of the produced dried biosolids to a cement-making component for use as fuel in the cement-making process.

The systems and techniques described here may provide one or more of the following advantages. First, a cement plant can provide waste heat gases (also simply referred to as "Waste Heat") generated during the cement-making process, to a dryer, heating the dryer air ("Dryer Air"), which can be handled in a manner that decreases the probability of unintended combustion within the dryer. Second, dried biosolids produced by a dryer can be recycled, that is, returned and added to incoming wet biosolids prior to entering the dryer in order to prevent the biosolids from entering a "plastic" or "sticky" drying phase, and thus prevent clogging and other problems from occurring during the drying process. Third, symbiotic efficiency can be achieved by drying the biosolids using waste heat from a cement-making process and in turn using the dried biosolids as fuel in the cement-making process. Fourth, downtime for a drying process using heat from cement making can be decreased by adding (or substituting) alternative or secondary heat sources to the primary heat source (e.g., a cement plant waste heat) used in the drying process.

The details of one or more embodiments are set forth in the accompanying drawings and the description below. Other features and advantages will be apparent from the description and drawings, and from the claims.

### DESCRIPTION OF DRAWINGS

FIG. 1 is a diagram of an example drying system that uses waste heat 106 from a cement-making system for drying wet biosolids.
FIG. 2 shows a diagram of an example heat exchange system for using the waste heat gas to dry the biosolids.
FIG. 3 shows a flow chart for an example method for transferring heat between gases.
FIG. 4 shows a flow chart for an example method for mixing dry and wet materials to facilitate drying to avoid a "plastic" or "sticky" phase often associated with drying biosolids.
FIG. 5 shows a flow chart for an example method for adjusting temperatures needed for a dryer system.

Like reference symbols in the various drawings indicate like elements.

### DETAILED DESCRIPTION

This document describes systems and techniques for drying biosolids using heat from a cement-making process. In some implementations, the dried biosolids are conveyed to components for use as fuel in the cement-making process. The components can burn the biosolids, which produces heat that dries more biosolids for fuel.

In some implementations, Waste Heat gas from the cement-making process is transferred as heated gas from one or more cement-making components such as a kiln, a pre-calciner, or a clinker cooler. The waste heat gas may contain impurities that might be undesirable to introduce directly into a biosolids dryer. Furthermore, if an oxygen content of the Waste Heat gas is sufficiently high, unsafe operating conditions (e.g., unintended combustion) may occur if the Waste Heat gas is allowed to come into direct contact with the biosolids.

To mitigate this occurrence, a heat exchanger may be introduced between the Waste Heat gas and the dryer. The heat exchanger can transfer heat from the Waste Heat gas of the cement-making component to gas or air used in the dryer. The oxygen level of the Dryer Air can be maintained below a combustion threshold (e.g., the air has an oxygen level that makes spontaneous combustion unlikely) so that it can be safely used to dry the biosolids. Alternately, the Waste Heat can be used in the heat exchanger to heat a thermal transfer fluid such as oil or steam which, in turn, can provide heat to the dryer.

In some implementations, some of the dried biosolids can be recycled, or mixed with incoming wet biosolids prior to entering the dryer whereby the wet biosolids coat the dry inner core, allowing for more efficient drying since the dryer will only have to evaporate water from the thin outer coating or layer of the biosolids particle. This process also may allow a hard, round biosolids pellet to form, which may be a valuable product that can be marketed as an organic fertilizer pellet as an alternative to being used as a fuel. Additionally, in some implementations, drying without recycling or mixing the biosolids may form clogging obstructions during the drying process due to the biosolids entering the plastic or sticky phase of drying. The mixing or recycling of dried biosolids with wet biosolids prior to drying may mitigate this problem.

In the instant document, the terms "gas" and "air" can include multiple elements. For example, in the above description, the gas can include air that, in turn, includes multiple elements such as oxygen, nitrogen, water vapor, particulate, etc. Although, the description below uses air as an example gas, other gas mixtures that are not substantially similar to atmospheric air can be used.

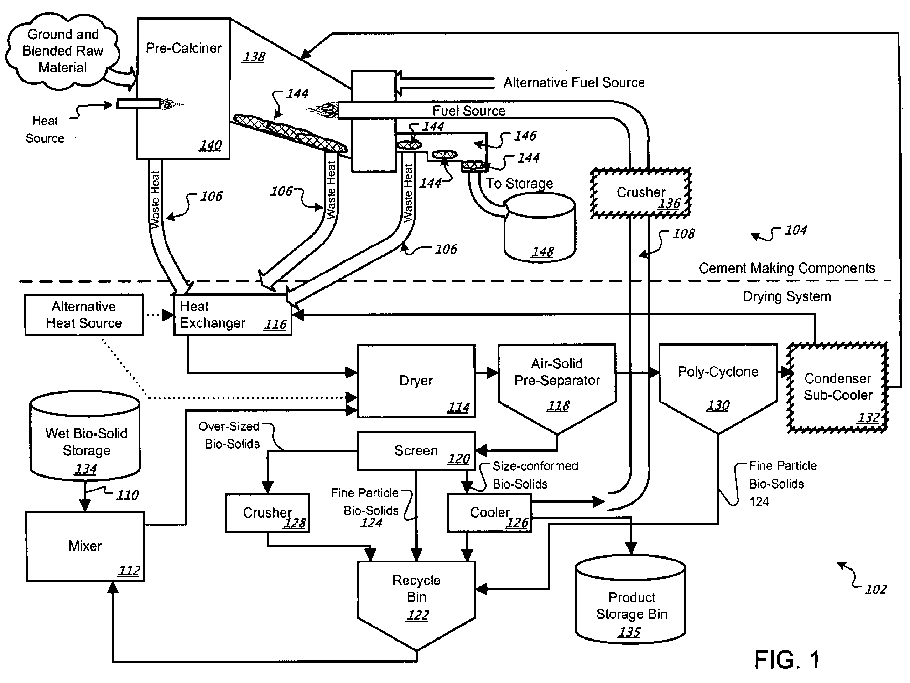

FIG. 1 is a diagram of an example drying system 102 that uses waste heat 106 from a cement-making system 104 for drying wet biosolids. As shown in the example of FIG. 1, the drying system 102 can provide dried biosolids to the cement-making system 104 for fuel (as indicated by the channel 108 conveying the biosolids to the cement-making system 104). The dryer 114 can consist of any one of a number of dryer types using air in direct contact with biosolids and can include rotary drum, fluidized bed, belt dryers, etc.

Biosolids dried by the drying system 102 can include, for example, liquid or semi-liquid material such as municipal sewage, pulp and paper sludge, industrial sludge, etc. The drying system 102 can produce dried biosolids, by drying the wet biosolids. In some implementations, all or a portion of the dried biosolids or product, can be stored and used as an organic fertilizer. In other implementations, such as the implementation shown in FIG. 1, the dried biosolids product can be used as fuel. For example, the product is used as fuel for the cement-making system 104.

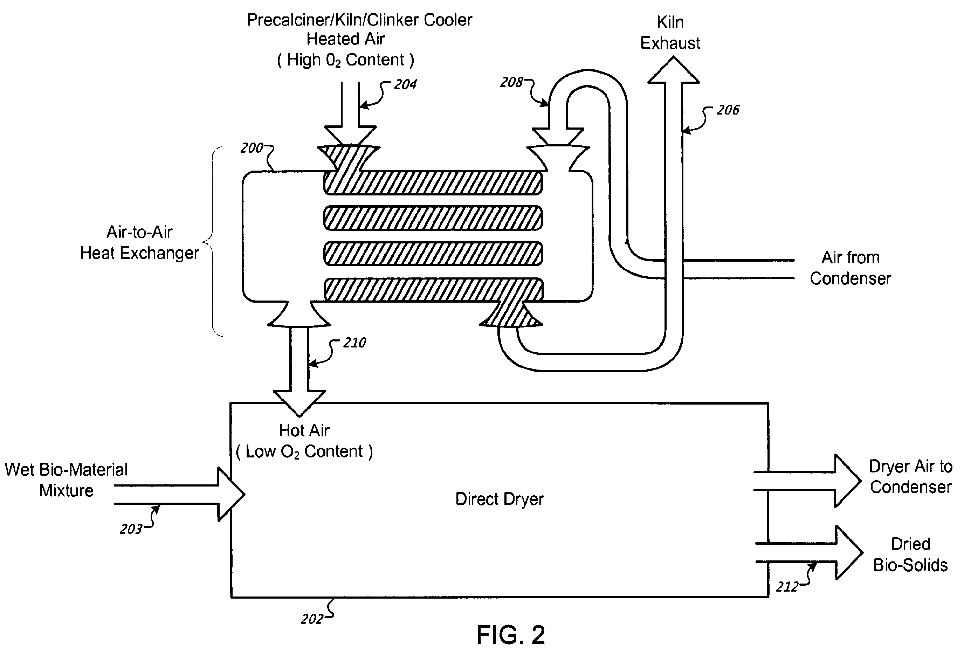

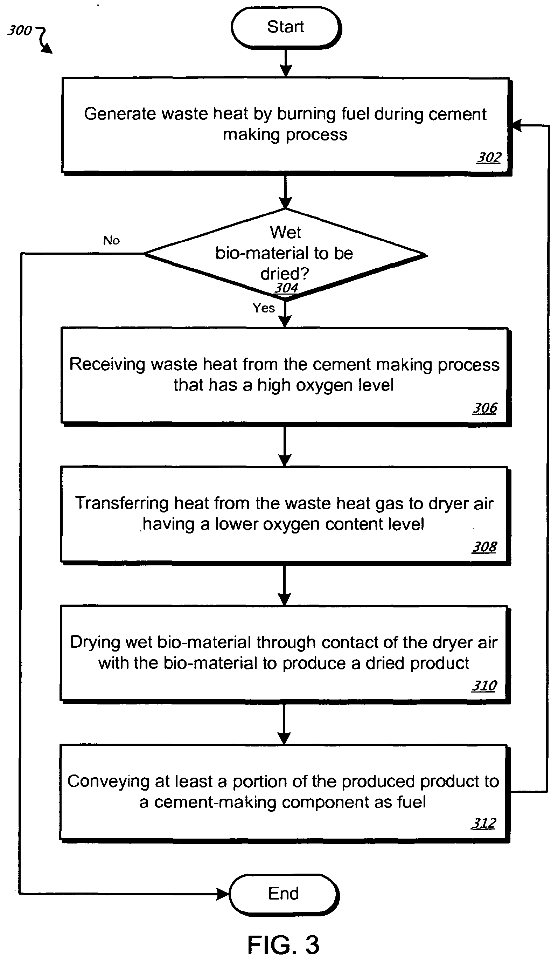

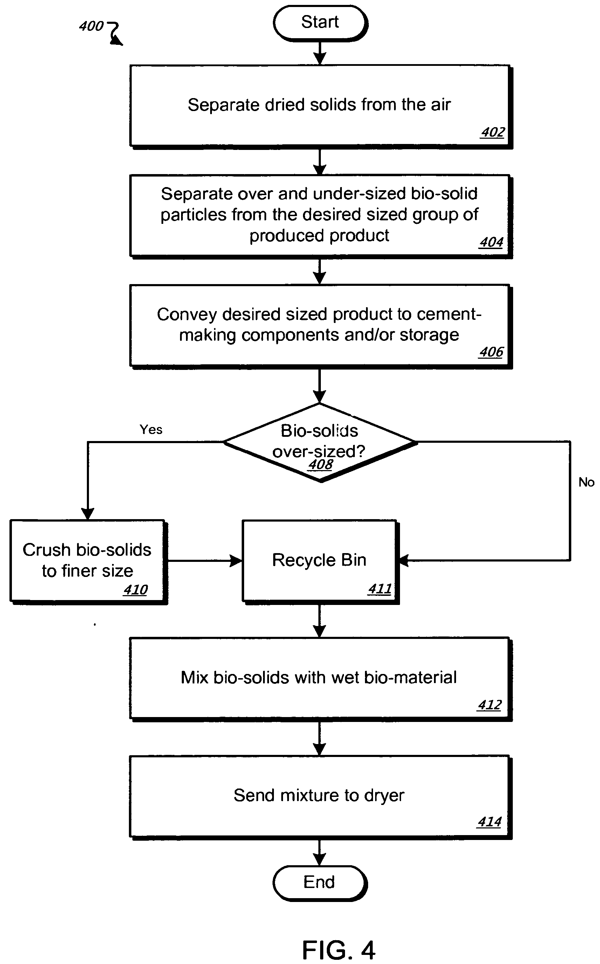

In some implementations, the drying system 100 stores wet incoming biosolids in Storage Bin 134 and receives the wet biosolids 110 at a mixer 112. The mixer 112 mixes the wet biosolids with dried biosolids, and the resulting mixture is sent to the dryer 114. The mixer 112 and associated processes are described in more detail below in association with FIG. 4. The dryer 114 can receive heated air from a heat exchanger 116, which is also described in more detail below in association with FIGs 2 and 3. The dryer 114 dries the wet biosolids mixture using heated air from the heat exchanger 116 and conveys the dried biosolids to the air-solid pre-separator 118. Alternately, in some dryers, the dryer can dry the wet biosolids mixture using air heated by hot oil or steam from the heat exchanger 116.

The air-solid pre-separator 118 can separate dried biosolid particles from the air and, if a specific particle size is desired, can convey the dried biosolids to a screen 120 for sifting. For example, the screen 120 may be a vibrating screen having apertures of predetermined sizes. In some implementations, biosolids that are smaller than the preset desired sized particles pass through and are conveyed to a recycling bin 122. Properly sized biosolids particles may fit through specifically sized apertures and can be cooled in a cooler 126 prior to storage. Biosolids that are larger than the desired size (e.g., over-sized biosolids) can be sent to a crusher 128, which crushes the over-sized biosolids and passes them to the recycle bin 122. The biosolids stored in the recycle bin 122 can be sent to the mixer 122 for mixing with incoming wet biosolids or cooled and sent to storage for later use as a fuel or fertilizer.

Air received from the air-solid pre-separator 118 may still contain fine particles of biosolids. The poly-cyclone 130 can separate the remaining fine particles from the air and then send the separated particles to the recycle bin 122. A condenser 132 can receive and cool the remaining air. Cooling the air may condense moisture stored in the air. The remaining air can be sent to a cement-making component, such as a kiln, for utilization or discharge or can be sent to air pollution control equipment such as a biofilter or afterburner for treatment and discharge to the atmosphere. In some implementations, the condenser 132 is optional and the air from the poly-cyclone 130 may be sent directly to the cement-making component for utilization or discharge.

In some implementations, the biosolids may be cooled in the cooler 126 and conveyed to the cement-making system 104. In other implementations the biosolids are cooled and conveyed to product storage 135 for subsequent distribution (e.g., as fertilizer).

When passing to the cement-making system 104, dried biosolids may pass through a crusher 136 that pulverizes the biosolids into fine particles to increase their combustibility. In some cases, a crusher 136 used to pulverize coal for injection into a cement-making component (e.g., a kiln) also can be used to pulverize the cooled biosolids.

In the example of FIG. 1, the dried biosolids are conveyed along the channel 108 to a kiln 138 where the biosolids are burned as fuel. In other implementations, the channel 108 can deliver the dried biosolids to a pre-calciner 140 or other cement-making component for burning as fuel.

As mentioned previously, the waste heat 106 from the cement-making process can be used to dry the biosolids received at the dryer 114. FIG. 2 shows a diagram of an example heat exchange system for using the waste heat to dry the biosolids. In the implementation of FIG. 2, a heat exchanger 200 receives hot air, or exhaust, from a cement-making component (e.g., from a pre-calciner, kiln, or clinker cooler). If this hot air were to be channeled directly from the cement-making component to the dryer, it may have an oxygen content high enough to support combustion, and thus, may be unsuitable for use directly in the dryer. Likewise, it may contain impurities that are undesirable to introduce into the drier (e.g., corrosive materials, etc.).

In some implementations, the heat exchanger 200 includes a set of metal tubing, plates, or other types of conduit to separate the hot air produced in the cement-making component - referred to as a primary heated air - from the dryer air (or alternatively thermal oil or steam), which is used by the dryer 202 to dry received wet biosolids mixture (where the receipt of the mixture is indicated by an arrow 203).

In some implementations, the heated dryer air is re-circulated in order to reduce the volume of discharge air and also to maintain a low oxygen level so as to remain suitable for use in the direct dryer (e.g., the oxygen content level is kept low enough to avoid combustion). In some implementations, the heat exchanger can be a gas-to-gas heat exchanger as shown in FIG. 2. In other implementations, the heat exchanger can be an air-to-fluid heat exchanger. For example, heat from the kiln 138 can be used to heat oil or water to create steam.

FIGs. 3, 4, and 5 are flow charts of example methods 300, 400, and 500 for drying biosolids. The methods 300, 400, and 500 include processes for transferring heat between gases, mixing dry and wet materials to facilitate drying, and adjusting heat sources, respectively. The example methods 300, 400, and 500 may be performed, for example, by a system such as the systems 100 or 200. For clarity of explanation, the following description uses these systems as the basis of an example; however, another system or a combination of systems may perform the methods 300, 400, and 500.

The method 300 may begin in step 302 in which a cement-making process generates heat by burning fuel. For example, the kiln 138 may generate waste heat (e.g., unused heat remaining after the cement process and normally discarded or wasted), which can be harnessed to provide heat to a dryer.

In step 304, a determination is made whether additional wet biosolids are available. In some implementations, the drying system 102 may receive wet biosolids at intervals and may not always have biosolids available for drying. For example, the drying system 102 can receive wet biosolids delivered at scheduled intervals. In certain situations, the drying system 102 may dry all the previously received wet biosolids before another supply is delivered. In this case, the method can end. Otherwise, the method 300 may advance to step 306 if there are more biosolids to dry.

In step 306, waste heat generated during the cement-making process is received. As discussed in association with step 302, this gas may have high oxygen content, and thus, may be unsuitable for direct use in the dryer.

In step 308, heat may be transferred from the waste heat to the dryer air via a heat exchanger. In some implementations, the heat exchanger receives both the exhaust air from the kiln and the dryer air, but does not allow the two gases to mix. Instead, the heat exchanger directs both gases through separate channels within the heat exchanger as illustrated in FIG. 2, thereby transferring heat from the waste heat gas to the dryer air.

The dryer air may have an oxygen level that is low enough so that it does not facilitate combustion or smoldering within the dryer (e.g., a high oxygen content may fuel an ignition of biosolid dust particles present in the drying process).

In step 310, wet biosolids are dried through contact of the heated dryer air with the biosolids. In some implementations, the dryer air heated by the heat exchanger 200 may be directed to the dryer 202 where the hot air contacts the wet biosolids, causing the biosolids to dry and form product.

In step 312, at least a portion of the produced biosolids can be conveyed to a cement-making component for use as fuel. For example, biosolids produced by the drying process may be conveyed to the kiln 138 and burned as fuel to generate heat as described in association with the step 302. In some implementations, part of the produced biosolids also may be conveyed to a separate storage area for use in other applications such as agricultural fertilizer. For clarity of explanation, finished dried biosolids produced by the process are referred to as "product".

FIG. 4 shows an example method 400 for mixing wet biosolids and dried biosolids. In some implementations, this mixing may decrease the chance that components within the drying system 102 will become clogged with sticky sludge created during the drying process.

The method 400 can begin in step 402, where dried biosolids may be separated from the air. For example, after the drying process is accomplished in the dryer 114, the air-solid pre-separator 118 may separate much of the biosolids from the air used to dry the biosolids in the dryer 114. The separated biosolids can be passed to the screen 120. Additionally, in some implementations, after processing within the air-solid pre-separator 118, air used to dry the biosolids can be passed to the poly-cyclone 130. Here, the poly-cyclone 130 may further extract smaller particles of biosolid from the dryer air. The smaller particles of biosolid may be directed to the recycling bin 122.

In step 404, over and under-sized biosolids can be separated. For example, the biosolids conveyed to the screen 120 by the air-solid pre-separator 118 may be screened to classify the dried biosolids based on the particle size. In some implementations, biosolids that conform to a predetermined size can be passed to the cooler 126, where they are cooled. For example, if the biosolids have other uses besides fuel for the cement-making process, the biosolids may need to be a certain size. For example, if the biosolids also are used as fertilizer pellets, the biosolids may have to conform to a size amenable to transportation and use as field fertilizer. Processing of the nonconforming biosolids is described below in association with steps 410 through 414 in accordance to one implementation.

In step 406, size- conforming biosolids may be conveyed to cement-making components and/or storage. For example, a first portion of the size-conformed biosolids passed to the cooler 126 may be conveyed to a component of the cement making process as fuel. A second portion of the size-conformed biosolids may be conveyed to the biosol id storage 134.

In step 408, a determination is made whether any of the non-conforming biosolids are oversized. For example, in some implementations, biosolids are transferred to the screen 120. Biosolids that do not pass through certain screen apertures of a predetermined size are determined to be oversized. In some implementations, smaller particles pass through the screen 120 directly into the recycling bin 122. If some of the biosolids are oversized, step 410 may be performed.

In step 410, the oversized biosolids may be crushed to a finer size. For example, oversized biosolids may be sent to the crusher 128, which in turn sends the crushed biosolids to the recycling bin 122.

In step 412, dried biosolids are mixed with wet biosolids. For example, the biosolids from the recycling bin 122 (e.g., the smaller particles that passed through the screen 120 and the crushed oversized biosolids) may be conveyed to the mixer 112, which also receives wet biosolids. The mixer 112 can combine the wet biosolids with the dried biosolids from the recycling bin 122. In some implementations, the combination may result in the wet biosolid coating the dried biosolid to produce a mixture that has a dried biosolid core and a wet biosolid coating, or outer layer.

In step 414, the mixture can be sent to the dryer 414. For example, the mixture may be conveyed from the mixer 112 to the dryer 114. By feeding the dryer 114 the mixture instead of only wet biosolids, the product produced may be more uniform in size and density, and thus, more valuable as a fertilizer.

In some implementations, only feeding wet biosolids to a dryer may create clogs within the dryer or subsequent components in a drying system. During the process of drying wet biosolids, there may be a point at which the biosolids become sticky and clog the drying system 102. By mixing the dried biosolids with the wet biosolids before sending it to the dryer, the drying system 102 may more effectively dry the wet biosolids, and avoid clogging the drying system 102. After the step 414, the method 400 can end.

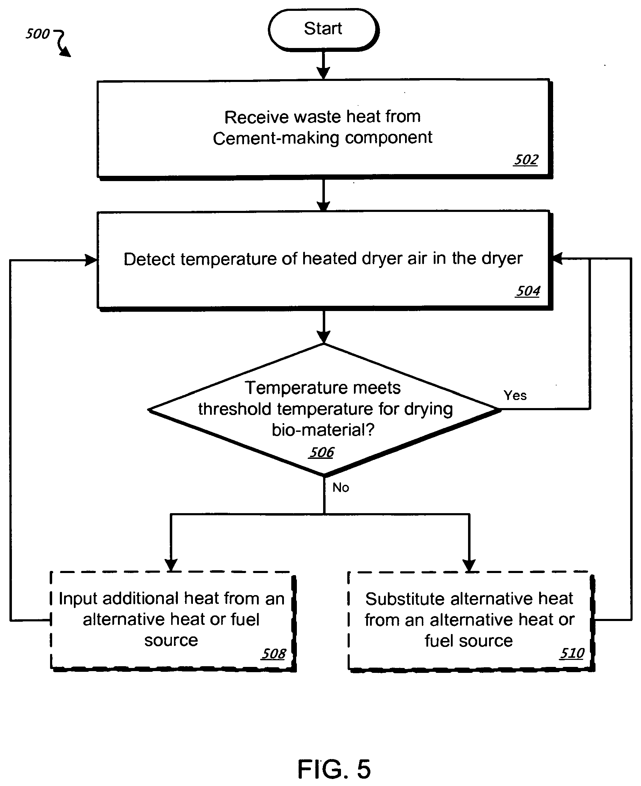

FIG. 5 is a flow chart of the example method 500 for switching among two (or more) heat sources for a drying system. In some implementations, the drying system 102 can include multiple heat sources so that if, for example, a required amount of waste heat is not available from the cement-making system 104, the drying system 102 can use heat from one or more alternate sources as indicated in FIG. 1.

The method 500 can begin with step 502, where waste heat is received from a cement-mixing component. For example, the dryer system 102 can receive heated air from the kiln 138. In some implementations, the heated air is run through a heat exchanger to transfer heat to dryer air which has a lower oxygen content than air exhausted from the kiln 138. In some instances, a reduced volume of waste heat or no waste heat at all may be available (e.g., the cement-making system is off-line).

In step 504, a temperature of the dryer air in the dryer is detected. For example, a heat source monitor can detect a temperature of the dryer air heated by the heat exchanger 114.

In step 506, a determination is made whether the volume of heat is sufficient for drying the wet biosolids. If the heat source monitor detects insufficient heat in the dryer, step 508 or step 510 can be performed. Otherwise, if the detected heat meets the threshold, the step 504 can be repeated.

In step 508, additional heat from an alternative fuel or heat source can be injected or mixed with the dryer air or to the heat exchanger (for use in heating the dryer air). Both example options are illustrated in FIG. 1 by use of dotted arrows between an alternative heat source and the heat exchanger 116 and dryer 114, respectively. In some implementations, the alternative heat source may be a burner fired with natural gas or fuel oil.

Alternatively, if step 510 is performed, dryer air heated by an alternative source may be substituted for waste heat produced by the cement-making system 104. In some implementations, the heat source can be completely switched from waste heat to an alternative heat source such as a coal, oil, gas burner, etc.. For example, the cement-making system 104 may shut down during certain periods (e.g., for maintenance, etc.). In this situation, the dryer system 102 can continue to process biosolids by switching to an alternative heat source.

Although a few implementations have been described in detail above, other modifications are possible. For example, the logic flows depicted in the figures do not require the particular order shown, or sequential order, to achieve desirable results. In addition, other steps may be provided, or steps may be eliminated, from the described flows, and other components may be added to, or removed from, the described systems. Accordingly, other implementations may be within the scope of the invention as defined by the claims.

## Claims

1. A system (102) for drying biosolids using waste heat (106) from a cement-making process, the system comprising:
an interface with a cement-making component, the interface to channel a waste heat gas (106) generated during a manufacture of cement;
a dryer (114) that receives wet biosolids (110) and uses heated dryer air in direct contact with the wet biosolids (110) to produce a dried product, wherein the dryer air has an oxygen content below a level allowing combustion to occur; and
a heat exchanger (116) that receives the waste heat gas (106) from the interface and uses the waste heat gas (106) to heat the dryer air for the dryer (114), wherein the waste heat gas (106) and the dryer air do not mix.

2. The system of claim 1, further comprising a vibrating screen (120) with apertures of predetermined sizes to separate properly sized particles of dried biosolids fitting through specifically sized apertures from over-sized particles that are larger than a desired size and from undersized particles that are smaller than the preset desired particle size.

3. The system of claim 2, further comprising a recycled biosolid bin (122) that stores a portion of dried product produced by the dryer (114), wherein the portion comprises the undersized biosolids particles that do not meet a predetermined product size threshold, and wherein the recycled biosolid bin (122) further stores the over-sized biosolids after being crushed in a crusher (128).

4. The system of claim 1, further comprising a mixer (112) that receives the recycled dried product to combine with the wet biosolids (110) before introducing the wet biosolids (110) to the dryer (114).

5. The system of claim 1, wherein the waste heat gas has a higher oxygen level content than the dryer air.

6. The system of claim 1, further comprising a dryer air recirculation system to control at least the oxygen content of the dryer air.

7. The system of claim 1, further comprising an alternative exhaust interface to channel a third heated gas to the heat exchanger (116),
further comprising an exhaust interface control to control amounts of the waste heat gas or the third heated gas provided to the heat exchanger (116),
wherein the exhaust interface control transmits a signal is configured to inject a first amount of the third heated gas if a second amount of the waste heat gas falls below a threshold, or
wherein the alternative exhaust interface is coupled to a heat source selected from a group consisting of a coal furnace, a natural gas furnace, and an oil furnace.

8. The system of claim 1, further comprising a cement component intake interface to convey at least a portion of the dried product from the direct dryer (114) to one or more cement-making components for use as fuel during the manufacture of cement.

9. A method of generating fuel for a cement-making process, the method comprising:
directing a waste heat gas generated during a cement-making process to a heat exchanger (116);
heating dryer air using the heat exchanger (116) to transfer heat from the waste heat gas to the dryer air, wherein the dryer air has an oxygen content that is low enough to substantially inhibit combustion in a dryer (114);
drying wet biosolids through contact with the dryer air within the dryer (114) to produce dried biosolids; and
conveying at least a portion of the produced dried biosolids to a cement-making component for use as fuel in the cement-making process.

## Patentansprüche

1. System (102) zum Trocknen von Biofeststoffen unter Verwendung von Abwärme (106) aus einem Zementherstellungsverfahren, wobei das System umfasst:
eine Kopplung mit einer Zementherstellungskomponente, wobei die Kopplung zum Leiten eines bei der Herstellung von Zement erzeugten Abwärmegases (106) ist;
einen Trockner (114), der feuchte Biofeststoffe (110) erhält und erhitzte Trocknerluft in direktem Kontakt mit den feuchten Biofeststoffen (110) verwendet, um ein getrocknetes Produkt zu erzeugen, wobei die Trocknerluft einen Sauerstoffgehalt unter einem Niveau aufweist, das das Auftreten von Verbrennung erlaubt; und
einen Wärmetauscher (116), der das Abwärmegas (106) von der Kopplung erhält und das Abwärmegas (106) verwendet, um die Trocknerluft für den Trockner (114) zu erhitzen, wobei sich das Abwärmegas (106) und die Trocknerluft nicht mischen.

2. System gemäß Anspruch 1, ferner umfassend ein Rüttelsieb (120) mit Öffnungen mit vorbestimmten Größen, um geeignet große Partikel von getrockneten Biofeststoffen, die durch spezifisch große Öffnungen passen, von zu großen Partikeln, die größer als eine gewünschte Größe sind, und von zu kleinen Partikeln, die kleiner als die vorbestimmte gewünschte Partikelgröße sind, zu trennen.

3. System gemäß Anspruch 2, ferner umfassend einen Behälter (122) für rückgeführten Biofeststoff, der einen Teil von getrocknetem Produkt, das von dem Trockner (114) hergestellt ist, aufbewahrt, wobei der Teil die zu kleinen Biofeststoffpartikel umfasst, die einem vorbestimmten Produktgrößen-Schwellenwert nicht entsprechen, und wobei der Behälter (122) für rückgeführten Biofeststoff ferner die zu großen Biofeststoffe aufbewahrt, nachdem sie in einer Zerkleinerungsvorrichtung (128) zerkleinert worden sind.

4. System gemäß Anspruch 1, ferner umfassend einen Mischer (112), der das rückgeführte getrocknete Produkt erhält, um es mit den feuchten Biofeststoffen (110) zu kombinieren, bevor die feuchten Biofeststoffe (110) in den Trockner (114) eingeführt werden.

5. System gemäß Anspruch 1, wobei das Abwärmegas einen höheren Sauerstoffgehalt als die Trocknerluft aufweist.

6. System gemäß Anspruch 1, ferner umfassend ein Trocknerluft-Umwälzsystem, um wenigstens den sauerstoffgehalt der Trocknerluft zu steuern.

7. System gemäß Anspruch 1, ferner umfassend eine alternative Abgaskopplung, um ein drittes erhitztes Gas zu dem Wärmetauscher (116) zu leiten,
ferner umfassend eine Abgaskopplungssteuerung, um die Mengen des Abwärmegases oder des dritten erhitzten Gases, die dem Wärmetauscher (116) zugeführt werden, zu steuern,
wobei die Abgaskopplungssteuerung ein Signal aussendet, das dafür ausgelegt ist, eine erste Menge des dritten erhitzten Gases einzublasen, wenn eine zweite Menge des Abwärmegases unter einen Schwellenwert fällt, oder
wobei eine alternative Abgaskopplung an eine Wärmequelle ausgewählt aus der Gruppe bestehend aus einer Kohlefeuerung, einer Erdgasfeuerung und einer Ölfeuerung gekoppelt ist.

8. System gemäß Anspruch 1, ferner umfassend eine Zementkomponenten-Aufnahmekopplung zum Befördern wenigstens eines Teils des getrockneten Produkts von dem Direkttrockner (114) zu einer oder mehreren Zementherstellungskomponenten für die Verwendung als Brennstoff bei der Herstellung von Zement.

9. Verfahren zum Herstellen von Brennstoff für ein Zementherstellungsverfahren, wobei das Verfahren umfasst:
Leiten eines bei einem Zementherstellungsverfahren erzeugten Abwärmegases zu einem Wärmetauscher (116);
Erhitzen von Trocknerluft unter Verwendung des Wärmetauschers (116), um Wärme von der Abwärmegas an die Trocknerluft zu übertragen, wobei die Trocknerluft einen Sauerstoffgehalt aufweist, der niedrig genug ist, um Verbrennung in einem Trockner (114) im Wesentlichen zu unterbinden;
Trocknen von feuchten Biofeststoffen durch Kontakt mit der Trocknerluft in dem Trockner (114), um getrocknete Biofeststoffe zu erzeugen; und
Zuführen wenigstens eines Teils des hergestellten getrockneten Biofeststoffs zu einer Zementherstellungskomponente für die Verwendung als Brennstoff bei dem Zementherstellungsverfahren.

## Revendications

1. Système (102) servant à sécher des biosolides en utilisant la chaleur résiduelle (106) provenant d'un procédé de fabrication de ciment, le système comprenant :
une interface avec un composant de fabrication de ciment, l'interface servant à canaliser un gaz porteur de chaleur résiduelle (106) généré pendant une fabrication de ciment ;
un séchoir (114) qui reçoit des biosolides humides (110) et utilise de l'air de séchoir chauffé en contact direct avec les biosolides humides (110) pour générer un produit séché, l'air de séchoir ayant une teneur en oxygène inférieure à un niveau permettant à une combustion de se produire ; et
un échangeur de chaleur (116) qui reçoit le gaz porteur de chaleur résiduelle (106) provenant de l'interface et utilise le gaz porteur de chaleur résiduelle (106) pour chauffer l'air de séchoir pour le séchoir (114), le gaz porteur de chaleur résiduelle (106) et l'air de séchoir ne se mélangeant pas.

2. Système de la revendication 1, comprenant en outre un crible vibrant (120) avec des ouvertures de tailles prédéterminées pour séparer des particules correctement dimensionnées de biosolides séchés ajustées à des ouvertures de taille spécifique des particules surdimensionnées qui sont plus grandes qu'une taille souhaitée et des particules sous-dimensionnées qui sont plus petites que la taille de particule souhaitée prédéfinie.

3. Système de la revendication 2, comprenant en outre une trémie à biosolides recyclés (122) qui stocke une portion du produit séché généré par le séchoir (114), la portion comprenant les particules de biosolides sous-dimensionnées qui ne respectent pas un seuil de taille de produit prédéterminé, et la trémie à biosolides recyclés (122) stockant en outre les biosolides surdimensionnés après qu'ils ont été concassés dans un concasseur (128).

4. Système de la revendication 1, comprenant en outre un mélangeur (112) qui reçoit le produit séché recyclé pour le combiner avec les biosolides humides (110) avant d'introduire les biosolides humides (110) dans le séchoir (114).

5. Système de la revendication 1, dans lequel le gaz porteur de chaleur résiduelle a une teneur en oxygène supérieure à celle de l'air de séchoir.

6. Système de la revendication 1, comprenant en outre un système de recirculation d'air de séchoir servant à réguler au moins la teneur en oxygène de l'air de séchoir.

7. Système de la revendication 1, comprenant en outre une interface d'échappement alternative servant à canaliser un troisième gaz chauffé vers l'échangeur de chaleur (116),
comprenant en outre une commande d'interface d'échappement servant à réguler les quantités du gaz porteur de chaleur résiduelle ou du troisième gaz chauffé fournies à l'échangeur de chaleur (116),
la commande d'interface d'échappement transmettant un signal qui est configuré pour injecter une première quantité du troisième gaz chauffé si une deuxième quantité du gaz porteur de chaleur résiduelle chute au-dessous d'un seuil, ou
l'interface d'échappement alternative étant couplée à une source de chaleur choisie dans le groupe constitué par une chaudière à charbon, une chaudière à gaz naturel, et une chaudière à mazout.

8. Système de la revendication 1, comprenant en outre une interface de prélèvement de composant de ciment servant à transporter au moins une portion du produit séché depuis le séchoir direct (114) jusqu'à un ou plusieurs composants de fabrication de ciment pour l'utiliser comme combustible pendant la fabrication de ciment.

9. Procédé de production de combustible pour un procédé de fabrication de ciment, le procédé comprenant :
l'acheminement d'un gaz porteur de chaleur résiduelle généré lors d'un procédé de fabrication de ciment jusqu'à un échangeur de chaleur (116) ;
le chauffage d'air de séchoir au moyen de l'échangeur de chaleur (116) pour transférer de la chaleur du gaz porteur de chaleur résiduelle à l'air de séchoir, l'air de séchoir ayant une teneur en oxygène qui est suffisamment basse pour inhiber sensiblement la combustion dans un séchoir (114) ;
le séchage de biosolides humides par contact avec l'air de séchoir à l'intérieur du séchoir (114) afin de générer des biosolides séchés ; et
le transport d'au moins une portion des biosolides séchés générés jusqu'à un composant de fabrication de ciment pour l'utiliser comme combustible dans le procédé de fabrication de ciment.
